# EUROPÄISCHE PATENTSCHRIFT

(11) **EP 0 356 861 B1**
(45) Veröffentlichungstag und Bekanntmachung des Hinweises auf die Patenterteilung: **12.01.1994**
(21) Anmeldenummer: 89115361.1
(22) Anmeldetag: 19.08.1989
(51) Int. Cl.: B01D 53/04, C01B 21/04, C01B 23/00

(54) **Trennung von Gasgemischen durch Vakuum Swing Adsorption (VSA) in einem Zwei-Adsorber-System**
Separation of gas mixtures by vacuum swing adsorption (VSA) in a two-adsorber-system
Séparation de mélanges de gaz par adsorption alternée à vacuum dans un système de deux adsorbeurs

(30) Priorität: 01.09.1988 DE 3829584
(43) Veröffentlichungstag der Anmeldung: 07.03.1990
(73) Patentinhaber: BAYER AG, 51368 Leverkusen (DE)
(72) Erfinder: Reiss, Gerhard, Dipl.-Ing., D-5090 Leverkusen (DE)

(56) Entgegenhaltungen:
- EP-A- 0 273 723
- EP-A- 0 334 495
- GB-A- 2 154 465
- US-A- 3 280 536
- US-A- 4 810 265

## Beschreibung

Die vorliegende Erfindung betrifft ein verbessertes und einfaches Verfahren zur adsorptiven Trennung von Gasgemischen, insbesondere von Luft, mittels anorganischer Adsorptionsmittel, insbesondere Molekularsiebzeolithe.

Die adsorptive Trennung von Gasgemischen mit Hilfe der Druckwechseladsorption ist seit über 20 Jahren bekannt, wobei inzwischen die vielfältigsten Trennprozesse entwickelt worden sind. Alle Verfahren beruhen aber darauf, daß der Gasanteil des Gasgemisches (Rohgas), der die höhere Affinität zum Adsorptionsmittel aufweist, in einem sogenannten Adsorptionsschritt an der Oberfläche des Adsorptionsmittels in einem sogenannten Adsorber festgehalten wird und die weniger stark adsorbierte Komponente aus dem mit Adsorptionsmittel gefüllten Adsorber abgezogen werden kann.

Die Desorption der adsorbierten Phase erreicht man stets durch Druckabsenkung nach dem Adsorptionsschritt und meist mit Spülung des Adsorptionsmittel mit einem Teil des weniger stark adsorbierten Gases, und zwar bei einem Druck von 1 bara oder höher. Man spricht hier von PSA-Systemen (Pressure-Swing-Adsorption). Im Falle der Druckabsenkung auf einen Druck unter 1 bara mittels einer Vakuumpumpe wird das Adsorptionsmittel ebenfalls mit einem Teil des weniger stark adsorbierten Gases gespült, es gibt aber auch Falle, in denen hierbei auf eine Spülung verzichtet wird, z.B. bei der Sauerstoffanreicherung von Luft mit Molekularsieb-Zeolithen. Diese Verfahren mit Vakuumdesorption bezeichnet man als VSA (Vakuum-Swing-Adsorption).

Nach dem Desorptionsschritt erfolgt stets die Befüllung des Adsorptionsmittels mit Gas auf den Druck des Adsorptionsschrittes, in Fällen der PSA-Adsorption mit dem weniger stark adsorbierten Gasanteil bzw. Rohgas oder beiden gleichzeitig. Im Falle der VSA-Technik erfolgt die Befüllung mit dem weniger stark adsorbierten Gasanteil.
Obige Trennprozesse sind deshalb in drei Schritte gegliedert:
Adsorption (Trennung), Desorption (Druckabsenkung) und Wiederbefüllung (Druckaufbau), weshalb zu einem vollständig kontinuierlich arbeitendem PSA/VSA-prozeß drei Adsorber notwendig sind.

Es wurde bekannt, daß im Falle der O₂-Anreicherung von Luft mittels des VSA-Prozesses mit MS (Molekularsieb)-Zeolithen bei einer Gleichstrombefüllung des Adsorbers mit Rohgas beginnend bei Unterdruck nur eine unzureichende Trennung der Luft erzielt wurde (Chemical Engineering Oct. 5, 1970, S. 54/55). Überraschenderweise wurde nun gefunden, daß trotz Einführen und Trennung des Rohgases bei Unterdruck im Falle der O₂-Anreicherung von Luft Sauerstoffkonzentrationen durch das erfindungsgemäße Verfahren im Produkt von weit über 90 % erreicht werden können.

Zur O₂-Anreicherung sind bereits PSA-Systeme mit zwei Adsorbern entwickelt worden (USA-PS 3.280.536). Sie arbeiten aber zum Teil diskontinuierlich, da zu Beginn der Druckabsenkung die Zufuhr des Rohgases unterbrochen wird. Gegenüber einem 3-Adsorbersystem haben diese 2-Bett-Systeme einen wesentlich höheren Energieverbrauch des Rohgas-Kompressors (Tappipress, 1987 Int. Oxygen Delignification Conference, S. 153).

Aus der nicht vorveröffentlichten europäischen Patentanmeldung EP-A 0 334 495 (Anmeldetag: 27. 02. 89, Veröffentlichungstag: 27. 09. 89; Priorität: 17.03. 88 JP 65 197/88) ist ein PSA-Verfahren bekannt, welches mit zwei Adsorbern und einem Raffinatspeicher einekontinuierliche Produktabgabe ermöglicht, hierbei jedoch die Rohgaszufuhr unterbrochen werden muß und damit nicht kontinuierlich erfolgt und bei dem der Adsorber jeweils fünf Teilschritte, den Produktabgabeschritt nicht mitgerechnet, durchlaufen muß.

Es wurden nun 2-Adsorbersysteme des VSA-Prozesses gefunden, die überraschenderweise gegenüber den 3-Adsorbersystemen nur einen geringfügig höheren Energieverbrauch benötigen, aber in der Investition der Anlage durch die geringe Anzahl an Ventilen und Adsorbern erheblich günstiger liegen, und zwar eine adsorptive Trennung eines Gasgemisches (Rohgas) in mit Adsorptionsmittel gefüllten Behältern (Adsorbern) mit Gewinnung der nicht oder weniger stark adsorbierten Phase und Desorption des adsorbierten Gasanteils (Adsorbat) bei Unterdruck, z.B. mittels einer Vakuumpumpe. Das Verfahren ist dadurch gekennzeichnet, daß zwei Adsorber (A und B) wechselseitig so betrieben werden, daß zu keiner Zeit des Trennprozesses die Zufuhr von Rohgas und ebenso die Desorption des Adsorbats, d.h. Anschluß der Vakuumpumpe unterbunden wird, wobei nach Erreichen des maximalen Adsorptionsdruckes die Trennung des Rohgases zum Teil bei Unterdruck erfolgt.

Das erfindungsgemäße Verfahren wird in einer typischen Form wie folgt durchgeführt (die Bezeichnung BF bedeutet: Wiederbefüllung, Dep: Druckerniedrigung, Des: Desorption):
1a) Zur Zeit t₁ fällt in Adsorber A der Druck P_{BF-3} von über 1 bar (absolut) auf P_{Dep-1'} wobei Entspannungsgas am oberen Ende des Adsorbers A in das obere Ende des Adsorbers B geführt wird, das untere Ende des Adsorbers A an die Vakuumpumpe angebunden wird, das untere Ende des Adsorbers B mit Rohgas befüllt wird, wodurch der Druck in Adsorber B von seinem niedrigsten Druck P_{Des-min} auf einen höheren Druck P_{BF-1} ansteigt, bzw. bei Unterdruck die Trennung des Rohgases erfolgt, wobei P_{BF-1} unter 1 bar (absolut) liegt und niedriger als P_{Dep-1} ist,
1b) zur Zeit t₂ derDruck in Adsorber A von P_{Dep-1} auf P_{Dep-2} abfällt, indem das obere Ende des Adsorbers A verschlossen ist, das untere Ende des Adsorbers A an eine Vakuumpumpe angeschlossen ist, in Adsorber B der Druck von P_{BF-1} auf einen Druck P_{BF-2} ansteigt, wobei Rohgas am unteren Ende des Adsorbers B einströmt und bei Unterdruck adsorptiv getrennt wird, gleichzeitig ein Teil des weniger stark adsorbierten Gasanteils (Raffinats) z.B. aus einem Raffinatspeicher (R) am oberen Ende des Adsorbers B einströmt, dieser Trennschritt t₂ beendet ist, wenn der Befüllungs- und Trenndruck zumindest 1 bar (absolut) erreicht,
1c) zur Zeit t₃ der Druck in Adsorber A von P_{Dep-2} auf seinen niedrigsten Desorptionsdruck P_{Des-min} abfällt, wobei dessen oberes Ende geschlossen ist, das untere Ende an eine Vakuumpumpe angeschlossen ist und in Adsorber B der Druck auf einen Wert P_{BF-3} ansteigt, indem am unteren Ende des Adsorbers B das Rohgas eintritt, im Adsorber die adsorptive Trennung bei einem Druck über 1 bar (absolut) erfolgt und am oberen Ende des Adsorbers B Raffinat bei einem Druck über 1 bar (absolut) bis maximal P_{BF-3} abgezogen wird,
1d) Der Prozeß analog zu 1a/1b/1c durch Umtauschen der Adsorber A und B fortgeführt wird,
in einer anderen Ausführungsform der Erfindung wird
2a) zur Zeit t₁ im Adsorber A der Druck P_{BF-3} von über 1 bar (absolut) auf P_{Dep-1} erniedrigt, wobei Entspannungsgas am oberen Ende des Adsorbers A in das obere Ende des Adsorbers B geführt wird, das untere Ende des Adsorbers A an Rohgasstrom angeschlossen bleibt, das untere Ende des Adsorber B an der Vakuumpumpe angeschlossen bleibt, hierbei der Druck im Adsober B von seinem niedrigsten Wert P_{Des-min} auf einen Druck P_{PF-1} ansteigt, wobei P_{PF-1} unter 1 bar (absolut) liegt und niedriger als P_{Dep-1} ist,
2b) zur Zeit t₂ wie im beschriebenen Prozeßabschnitt 1b) Adsorber A evakuiert wird, Adsorber B vom oberen Ende her mit Raffinat, z.B. aus einem Raffinatspeicher und vom unteren Ende mit Rohgas P_{BF-2} befüllt wird,
2c) zur Zeit t₃ wie im beschriebenen Prozeßabschnitt 1c) Adsorber A evakuiert wird und Adsorber B vom unteren Ende her mit Rohgas befüllt wird, wodurch bei einem von 1 bar (absolut) bis P_{BF-3} am oberen Ende des Adsorbers B Raffinatgas als Produkt abgezogen wird,
2d) der Prozeß analog zu Prozeßschritten 2a/2b/2c durch Umtauschen der Adsorber A und B fortgeführt wird.

Als Adsorptionsmittel für das erfindungsgemäße Verfahren eignen sich Molekularsiebzeolithe wie Zeolith A und X in der Na-Form oder in der mit zweiwertigen (Erd)-Alkaliionen ausgetauschten Form wie Ca, Mg, Sr oder deren Mischungen, oder natürliche Zeolithe bzw. deren synthetisch hergestellte Formen wie Mordenit oder Chabazit.

Es sind bereits auf dem VSA-Gebiet Verfahren mit 3 Adsorbern bekannt, in denen z.B. ein Adsorber A am unteren Ende evakuiert wird, gleichzeitig am oberen Ende Gas zum Befüllen eines evakuierten Adsorbers B benutzt wird, diesem Adsorber B aber hierbei nicht gleichzeitig am unteren Ende mit Rohgas befüllt wird (US-A 4.684.377) oder ebenso in einem 3-Adsorber-System aus Adsorber A am oberen Ende Produktgas abgezogen wird, dies in das obere Ende von Adsorber B eingeführt wird, das untere Ende von Adsorber B an eine Vakuumpumpe angeschlossen ist aber hierbei nicht gleichzeitig das untere Ende von Adsorber A mit Rohgas beaufschlagt wird (GB-A 2 154 895). Es ist ein PSA/VSA-Kombinationsverfahren mit 2 Adsorbern bekannt (US-A 4.065.272), bei dem kontinuierlich Rohgas den Adsorbern zugeführt wird aber die Desorption des Adsorbers, bzw. der Anschluß der Vakuumpumpe hierfür unterbrochen werden muß, um den Adsorber auf 1 bara zu entspannen, bzw. nach dem Evakuieren wieder mit Raffinat zu bespannen.

Die erfindungsgemäßen VSA-Prozesse sollen in folgenden Beispielen näher erläutert werden.

Für alle Beispiele blieben folgende Daten konstant:
Adsorberinnendurchmesser: 550 mm
Adsorberschütthöhe: 2500
Adsorptionsmittelfüllung je Adsorber: 70 dm³ mittelporiges Kieselgel am unteren Ende, Restschüttung jeweils 340 kg Molekularsieb-zeolith A in der Ca-Form. Der Raffinatspeicher hatte ein Volumen von 3,6 m³. Das zugeführte Rohgas hatte eine Temperatur von +30°C und war stets bei 1 bara, 30°C zu 75 % wassergesättigt. Als Vakuumpumpe wurde eine über ein Getriebe einstellbare Ölringpumpe verwendet. Das Rohgas wurde über ein Rootsgebläse verdichtet. Der Druck wurde jeweils am unteren Ende des Adsorbers gemessen.

### Beispiel 1

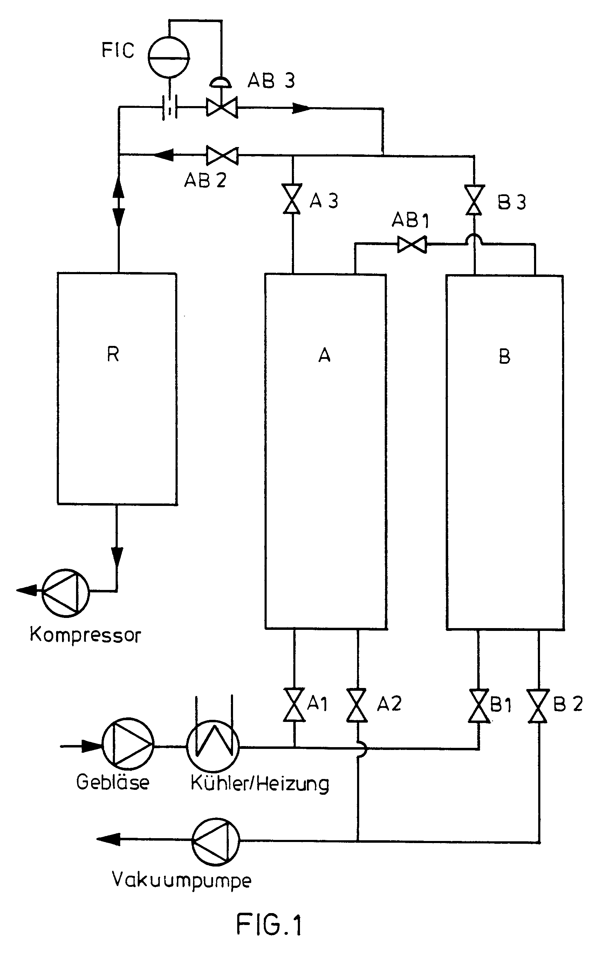

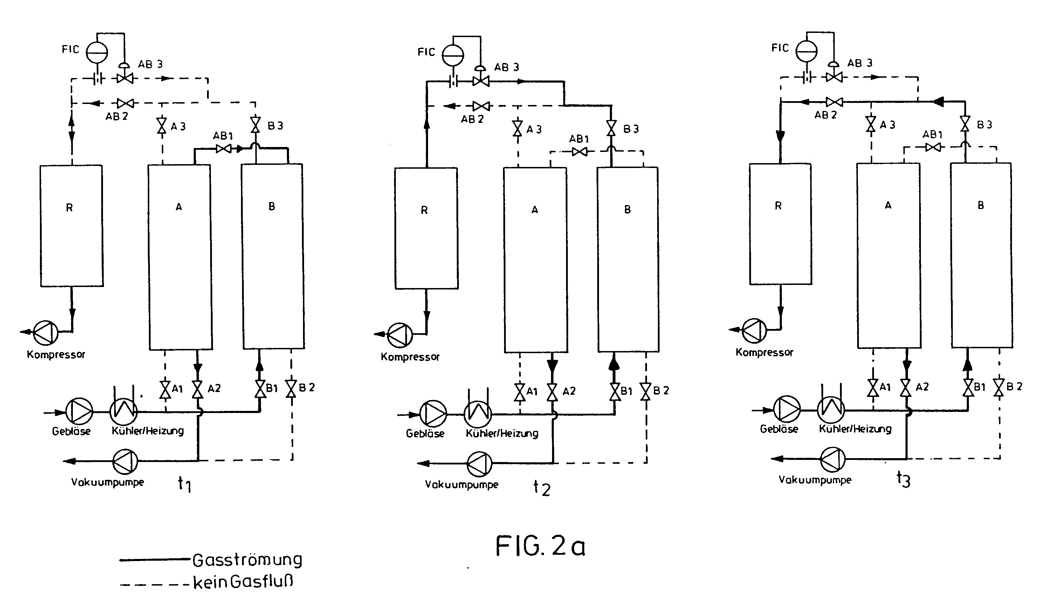

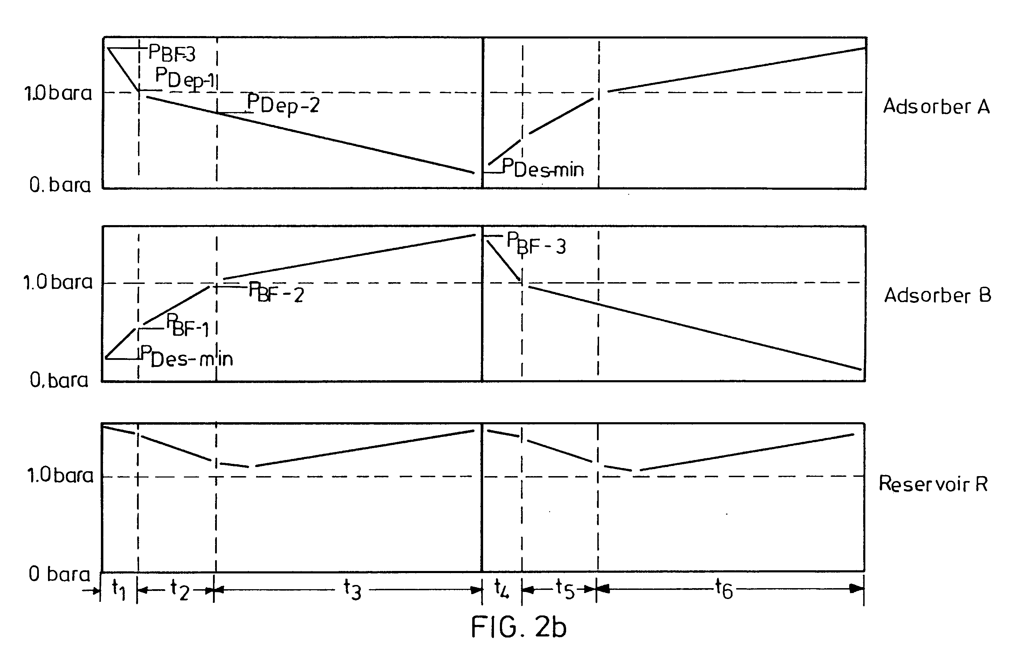

Es wurde eine Anlage entsprechend Abbildung 1 verwendet. Prozeßverlauf und Druckverlauf ist in Abbildung 2a und 2b wiedergegeben. Produktgas ist sauerstoffreiche Luft.

### Zeit t₁; 0 bis 4 Sekunden.

Ein Luftverdichter mit einer Leistung von 275 Nm³/h lieferte Luft über Ventil B1 in Adsorber B, wobei der Druck in Adsorber B von P_{Des-min} = 220 mbar auf P_{BF-1} = 650 mbar anstieg, gleichzeitig wurde in Adsorber A ein Maximaldruck P_{BF-3} = 1500 mbar (abs) reduziert, indem am oberen Ende über Ventil AB1 Gas in Adsorber B strömte, am unteren Ende über Ventil A2 mit einer Vakuumpumpe evakuiert wurde, wobei der Druck im Adsorber A auf P_{Dep-1} = 990 mbar absank. Speicher R lieferte Produktgas bei einem Druck von ca. 1,5 bara.

### Zeit t₂; 4 bis 19 Sekunden.

Adsorber A wurde über Ventil A2 auf P_{Dep-2} = 440 mbar evakuiert, oberes Ende des Adsorbers A war geschlossen. Adsorber B wurde mit Luft aus dem Luftverdichter am unteren Ende über Ventil B1 auf P_{BF-2} = 1 bara bespannt, gleichzeitig erfolgte eine Befüllung mit Gas aus dem Speicher R über ein mengengeregeltes Ventil AB3 und Ventil B3, wobei der Druck im Speicher von ca. 1,5 bara auf 1,1 bara abfiel. Aus Speicher R wurde weiterhin Produktgas abgezogen.

### Zeit t₃; 19 bis 45 Sekunden.

Adsorber A wurde weiterhin evakuiert, wobei ein Enddruck von 220 mbar erreicht wurde. Im Adsorber B strömte Luft über Ventil B1, über Ventil B3 wurde Produktgas über Ventil AB2 in Speicher R eingetragen, der Druck in Adsorber B und im Speicher R erreichte einen Enddruck von 1,5 bara.

### Zeiten t₄/t₅/t₆; 45 bis 90 Sekunden.

Der Prozeß verlief analog zu Zeiten t₁/t₂/t₃, nur wurde Adsorber A gegen Adsorber B ausgetauscht.

Es wurde eine Produktmenge aus Speicher R von 27,8 Nm³/h mit einer O₂-Konzentration von 93 % abgezogen. Die maximal erreichbare O₂-Konzentration betrug 96 %, bei einer Produktmenge von 22,9 Nm³/h.

### Beispiel 2

Es wurde der Prozeßablauf gemäß Beispiel 1 gewählt. Die Zykluszeit betrug t₁ = 4 Sekunden, t₂ = 15 Sekunden, t₃ = 41 Sekunden. Das eintretende Rohgas hatte folgende Zusammensetzung (Vol-%); H₂ : 10 %; Ar : 15 %; N₂ : 50 %, CH₄ : 25 %. Der Enddruck der Desorption betrug 220 mbar, maximaler Enddruck der Adsorption 1,5 bara.

Es wurde eine Anreicherung des Argon erreicht, d.h. bei einer Rohgasmenge von 270 Nm³/h wurde eine Produktgasmenge von 44 Nm³/h mit der Zusammensetzung (Vol-%) 49,5 % Argon, 51 % H₂, 0,5 % N₂ gewonnen.

### Beispiel 3

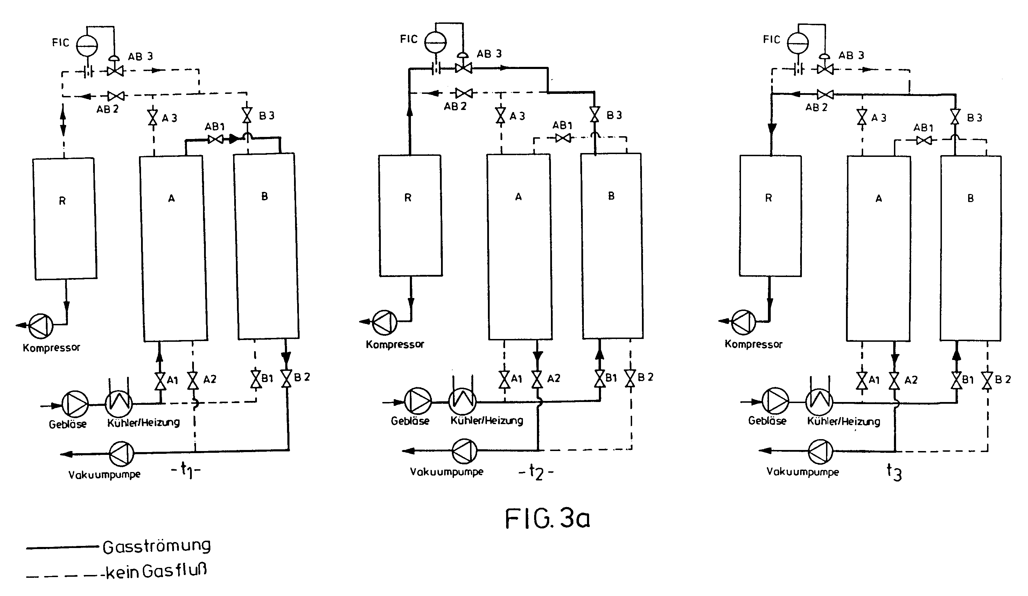

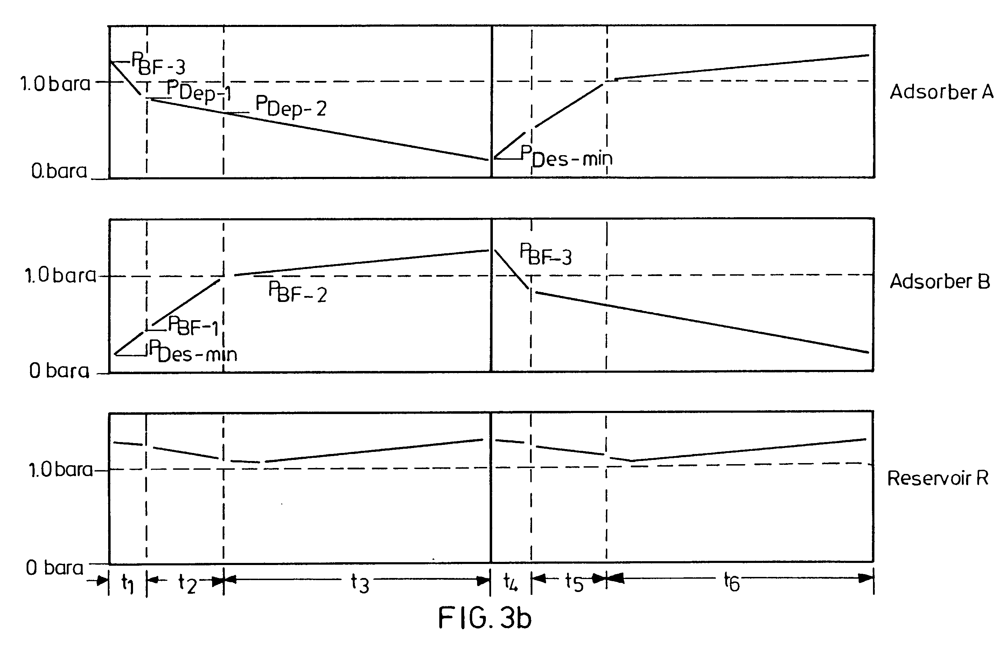

Es wurde die gleiche Anlage gemäß Beispiele 1 und 2 verwendet. Produktgas ist sauerstoffangereicherte Luft, Prozeßablauf und Druckverlauf ist in Abbildung 3a und 3b wiedergegeben.

### Zeit t₁; 0 bis 8 Sekunden.

Luft strömte über einen Verdichter durch Ventil A1 in Adsorber A, wobei das obere Auslaßende des Adsorbers A mit dem oberen Auslaßende des Adsorbers B über Ventil AB1 verbunden ist, der Druck in Adsorber A nahm von seinem höchsten Wert P_{BF-3} = 1,1 bara auf einen niedrigeren Wert P_{Dep-1} = 900 mbar ab, da Adsorber B am unteren Ende über Ventil B2 an eine Vakuumpumpe angeschlossen war, wodurch der Druck in Adsorber B von seinem niedrigsten Wert P_{Des-min} = 195 mbar auf P_{BF-1} = 400 mbar anstieg. Speicher R liefert bei etwa 1,1 bara Produktgas.

### Zeit t₂; 8 bis 20 Sekunden.

Adsorber B wurde am unteren Ende über Ventil B1 mit Luft aus dem Luftverdichter beaufschlagt, wodurch der Druck in Adsorber B auf etwa 1 bara anstieg.

Gleichzeitig erfolgte eine Auffüllung mit Produktgas aus Speicher R, mengengeregeltes Ventil AB3, Ventil B3 in Adsorber B. Der Druck in Speicher R fiel dadurch auf etwa 1 bar und lieferte Produktgas über den Produkt-Kompressor. Adsorber A wurde über Ventil A2 evakuiert, wobei dessen Druck auf P_{Dep-2} abfiel.

### Zeit t₃; 20 bis 60 Sekunden.

Adsorber B wurde wie zur Zeit t₂ mit Luft versorgt, wobei der Druck auf einen Endwert von 1,1 bar anstieg. Produktgas strömte am oberen Ende des Adsorbers B über Ventile B3, AN2 in Speicher R, wobei Produktgas über den Produkt-Kompressor abgezogen wurde. Adsorber A wurde wie im Intervall t₂ evakuiert, wobei der Druck auf einen Endwert P_{Des-min} = 195 mbar absank.

### Zeiten t₄/t₅/t₆; 60 bis 120 Sekunden.

Der Vorgang wiederholte sich analog zu Zeiten t₁/t₂/t₃, nur sind Adsorber A und B in ihren Funktionen ausgetauscht.

Es konnte eine Produktmenge am Produkt-Kompressor von 17,5 Nm³/h bei einer O₂-Konzentration von 93 % gewonnen werden. Die erreichbare maximale O₂-Konzentration betrug 95,8 % Vol.

### Beispiel 4

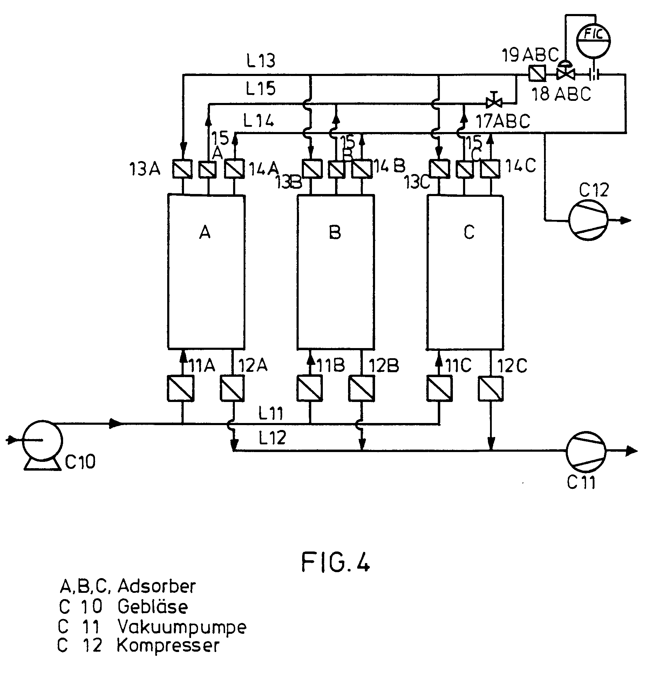

Es wurde eine Anlage gemäß Abbildung 4 gewählt. (Es ist zu vermerken, daß die Versuchsanlage der Abbildung 1 aus einem Teil der Gesamtversuchsanlage der Abbildung 4 bestand).

Die Abbildung 4 stellt eine VSA-Anlage, z.B. zur O₂-Anreicherung von Luft dar, wie sie bereits in der Praxis in Betrieb sind.

Während ein Adsorber mit Luft beschickt wird, wird ein zweiter Adsorber evakuiert, ein dritter Adsorber wieder mit O₂-reichem Produktgas auf Adsorptionsdruck befüllt.

Entsprechend der erfindungsgemäßen Verfahren (Beispiele 1 und 3), kann die Kapazität einer solchen 3-Adsorber-VSA-Anlage wesentlich vergrößert werden, indem zwei Adsorber zeitlich verschoben gleichzeitig, z.B. mit erhöhter Luftmenge beschickt werden und der dritte Adsorber evakuiert wird, wobei im Falle einer bereits bestehenden Anlage die Vakuumpumpe entsprechend der vergrößertn Luftmenge in ihrer Leistung vergrößert werden müßte.

Es besteht auch die Möglichkeit, eine Neuanlage mit drei Adsorbern entsprechend des erfindungsgemäßen Verfahrens zu konzipieren. Dies ist immer dann angebracht, wenn Anlagen mit sehr hoher Kapazität geplant sind und eine Anlage mit zwei Zügen aus Kostengründen entfällt oder Übergrößen z.B. an Ventilen nicht mehr eingesetzt werden können. Dadurch ist es möglich, bei gleicher Kapazität eine Anlage mit 3 Adsorbereinheiten statt 6 Adsorbern zu betreiben.

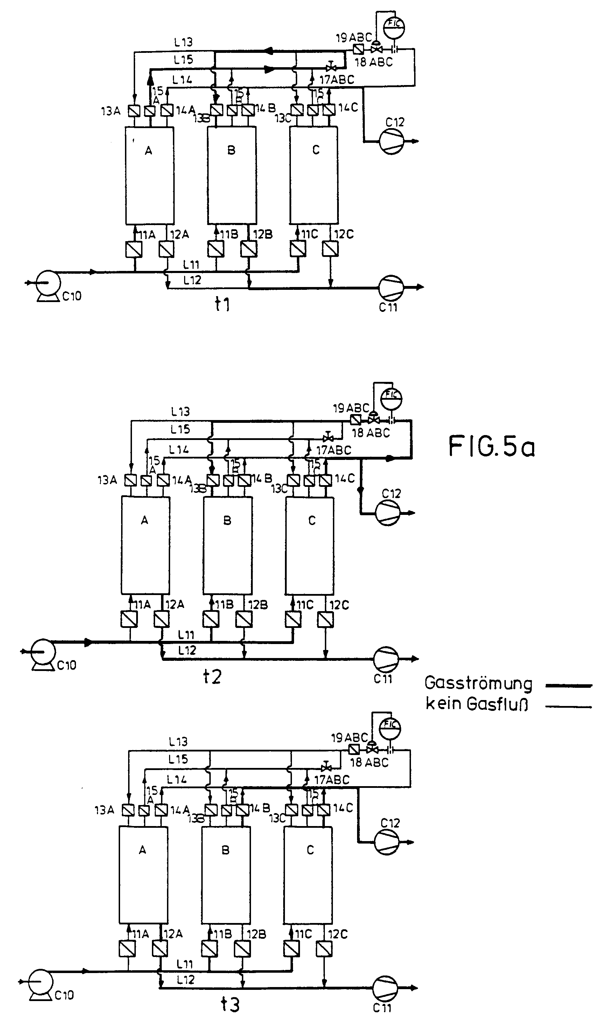

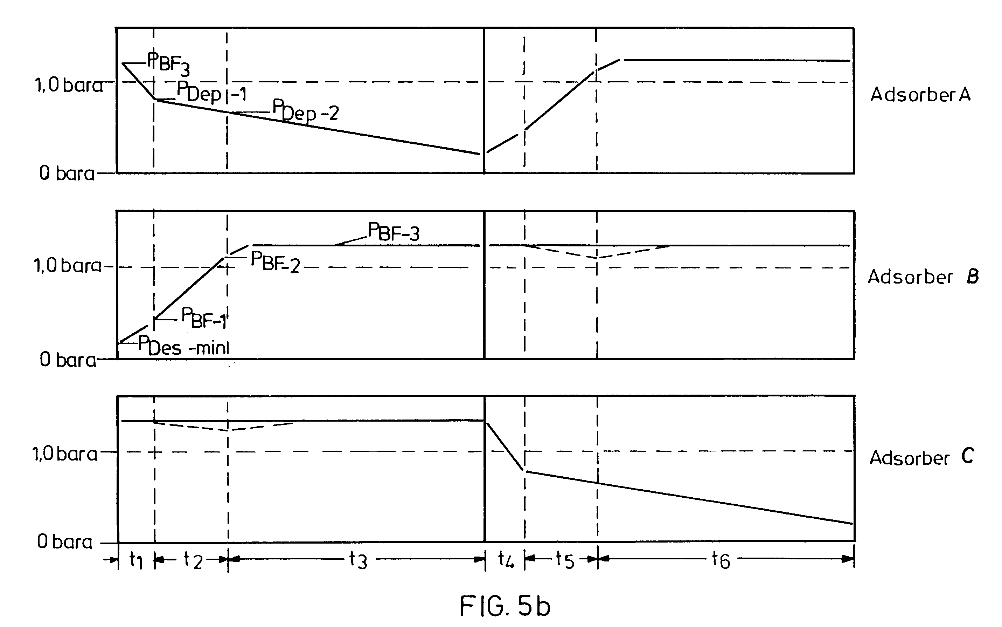

Zur Demonstration dieses erfindungsgemäßen Verfahrens haben wir den Prozeß entsprechend Beispiel 3 gewählt. Es ist zu betonen, daß natürlich auch das Verfahren des Beispiels 1 eingesetzt werden kann. Prozeßablauf und Druckverlauf sind aus Abbildung 5a und 5b ersichtlich.

### Zeit t₁; 0 bis 6 Sekunden.

Luft-Kompressor C 10 lieferte Luft in Adsorber C über Ventil 11 C, Adsorber C produziert über Ventil 14 C in Produkt-Kompressor C 12 O₂-angereicherte Luft, Druck in Adsorber C P_{BF-3} = 1,5 bara.

Luft aus Kompressor C10 strömte durch teilweise geöffnetes Ventil 11A in Adsorber A, wobei der Druck in Adsorber A von P_{BF-3} = 1,5 bara auf P_{Dep-1} = 900 mbar abfiel, da Ventil 15 A am oberen Ende des Adsorbers A geöffnet war und Entspannungsgas über das Handventil 17 ABC, Ventil 13 B in das obere Ende des Adsorbers B einströmte, dieser Adsorber seinen niedrigsten Druck P_{Des-min} = 205 mbar hatte und durch das Gas aus Adsorber A ein Druckanstieg in Adsorber B von P_{Des-min} auf P_{BF-1} = 400 mbar erfolgte, gleichzeitig das untere Ende des Adsorbers B über das Ventil 12B an eine Vakuumpumpe C11 angeschlossen war.

### Zeit t₂; 6 bis 16 Sekunden.

Adsorber C war identisch wie zur Zeit t₁ in Betrieb. Adsorber A wurde über Ventil 12A von P_{Dep-1} auf P_{Dep-2} evakuiert. Adsorber B wude am unteren Ende über teilweise geöffnetes Ventil 11 B mit Luft beschickt, gleichzeitig erfolgte eine Befüllung mit O₂-angereicherter Luft aus Adsorber C, und zwar über mengengeregeltes Ventil 18 ABC. Ventil 19 ABC, Ventil 13B, wobei der Druck in Adsorber B von P_{BF-1} = 400 mbar auf P_{BF-2} = 1,15 bara anstieg. Hierbei sank der Druck in Adsorber C von 1,5 bara auf etwa 1,35 bis 1,4 bara ab.

### Zeit t₃; 16 bis 35 Sekunden.

Adsorber C war wie zur Zeit t₁ in Betrieb. Adsorber B wurde am unteren Ende über Ventil 11B mit Luft beschickt, O₂-angereicherte Luft verließ Adsorber B am oberen Auslaßende, wobei Ventil 14B langsam geöffnet wurde, d.h. der Enddruck P_{BF-3} = 1,5 bara erreicht wurde. Adsorber A wurde wie zur Zeit t₂ evakuiert, wobei der Minimaldruck der Desorption P_{Des-min} = 205 mbar erreicht wurde.

### Zeit t₄; 35 bis 41 Sekunden.

Analog zur Zeit t₁, Adsorber C in Betrieb wie Adsorber A (t₁), Adsorber B startete den zweiten Teil der Adsorption, Adsorber A in Betrieb wie Adsorber B (t₁).

### Zeit t₅; 41 bis 51 Sekunden.

Analog zur Zeit t₂, Adsorber C in Betrieb wie Adsorber A (t₂). Adsorber B war auf Adsorption bei 1,5 bara, Adsorber A in Betrieb wie Adsorber B (t₂).

### Zeit t₆; 51 bis 70 Sekunden.

Analog zur Zeit t₃, Adsorber C auf Evakuieren wie Adsorber A (t₃), Adsorber B auf Adsorption bei 1,5 bara, Adsorber A auf Adsorptionsbetrieb bei 1,5 bara wie Adsorber B (t₃).

Danach wurden die Adsorber wieder umgeschaltet, d.h. Adsorber A startete wie Adsorber C zur Zeit t₁, Adsorber B startete wie Adsorber A zur Zeit t₁, Adsorber C startete wie Adsorber B zur Zeit t₁.

Während dieses Prozesses wurde über Produkt-Kompressor C12 O₂-angereicherte Luft von 36 Nm³/h mit einer O₂-Konzentration von 93 % Vol. abgezogen, die Luftmenge des Luftkompressors betrug hierbei 352 Nm³/h.

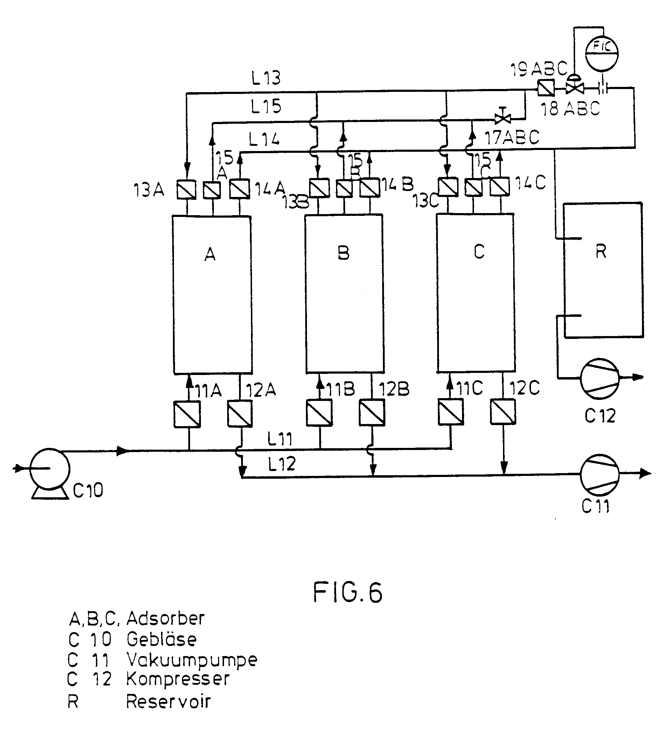

Das erfindungsgemäße 2-Adsorber-VSA-Verfahren kann in einem weiteren Fall im Bereich des Betriebes von 3-Adsorber-VSA-Verfahren eingesetzt werden. Ein solches 3-Adsorber-System ist in Abbildung 6 dargestellt, das bis auf das Ausgleichsgefäß R dem System und Prozeßablauf der Abbildung 4 entspricht.

In bisherigen Verfahren mußte eine 3-Bett-VSA-Anlage abgestellt werden, wenn eine Adsorbereinheit ausfiel, z.B. durch Verwirbelung des Adsorptionsmittels, Fehlfunktion eines Ventils. Mit Hilfe der erfindungsgemäßen Verfahren kann bei Fehlfunktion z.B. des Adsorbers C dieser Adsorber aus dem Prozeß herausgenommen werden, z.B. durch Schließen dessen Ventile, bzw. zusätzlich durch Anbringen von Steckscheiben zwischen dessen Ventile und den Gasleitungen L11/L12/L13/L14/L15.

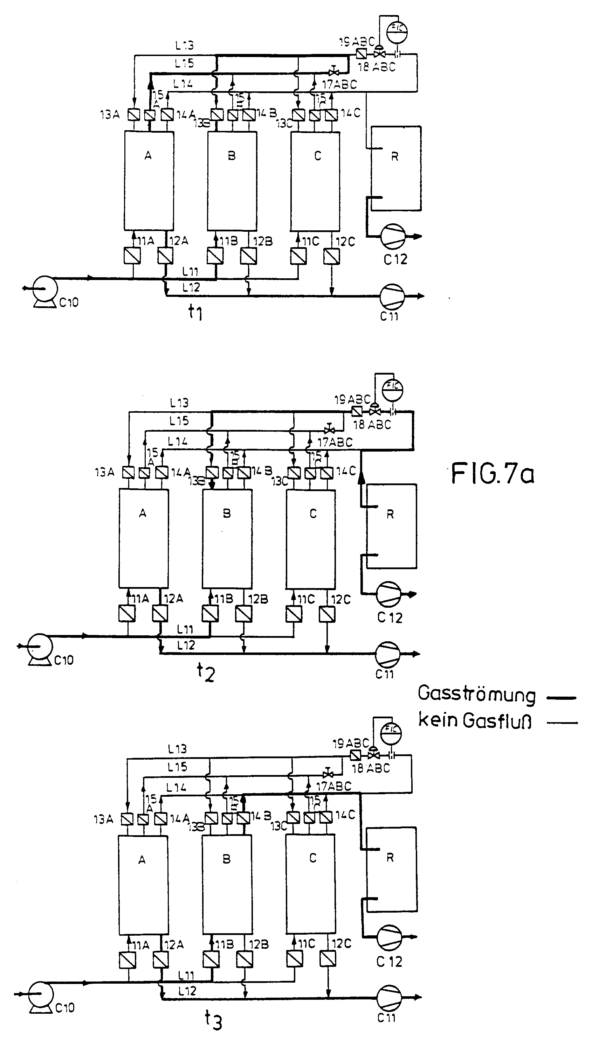

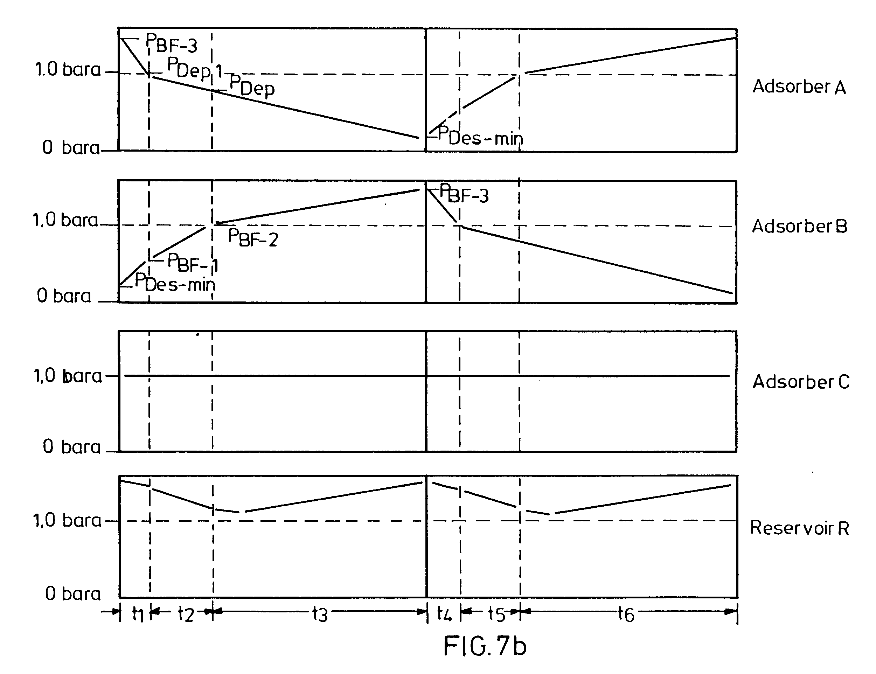

In Abbildung 7a und 7b ist der Prozeßablauf und Druckverlauf der verbliebenen zwei Adsorber A und B dargestellt, und zwar gemäß des Beispiels 1. Es ist aber auch ein Betrieb entsprechend Beispiel 3 möglich. Der dargestellte Prozeßablauf und der Anlagenaufbau (der Restanlage) der Abbildungen 7a/7b sind identisch mit Abbildung 1, bzw. den Darstellungen 2a und 2b, weshalb sich eine erneute (identische) Beschreibung erübrigt.

## Patentansprüche

1. Verfahren zur adsorptiven Trennung von Gasgemischen mit Vakuum Swing Adsorption in zwei mit Adsorptionsmittel gefüllten Behältern als Adsorber A und B, die mit unterem und oberem Einlaß und Auslaßende versehen sind, mit Gewinnung des nicht oder Weniger stark adsorbierenden Gasanteils als Raffinat aus oberem Auslaßende, das mit einem Raffinatspeicher verbunden ist, und mit Desorption des adsorbierten oder stärker adsorbierten Gasanteiles bei Unterdruck mittels einer Vakuumpumpe, dadurch gekennzeichnet, daß die zwei Adsorber A und B wechselseitig betrieben werden, zu keiner Zeit des Prozeßablaufs die Zufuhr von Rohgas in die Adsorber unterbunden wird, teilweise die Trennung des Rohgases bei Unterdruck erfolgt, während des ganzen Prozeßablaufes die Desorption des Adsorbats ohne Unterbrechung erfolgt, die Vakuumpumpe kontinuierlich mit der Adsorptionsmittelschüttung in Verbindung bleibt, wobei in einem ersten Zwei-Adsorber-VSA-Prozeß
a) Adsorber A nach Beendigung der Adsorption in einem ersten Prozeßschritt zur Zeit t₁ am oberen Ende entspannt wird, das dabei freiwerdende Gas in das obere Ende eines evakuierten Adsorbers B einströmt, wobei Adsorber A am unteren Ende an eine Vakuumpumpe angeschlossen ist und Adsorber B am unteren Ende mit Rohgas befüllt, d.h. bespannt wird, die Verbindung zum Raffinatspeicher R geschlossen ist und der Raffinatspeicher R Produkt nach außen abgibt,
b) in einem zweiten Prozeßschritt zur Zeit t₂ Adsorber A evakuiert wird und Adsorber B am oberen Ende mit Raffinat aus dem Raffinatspeicher R gefüllt wird, wobei Adsorber B am unteren Ende bei Unterdruck bis auf 1 bar (absolut) mit Rohgas befüllt wird,
c) in einem dritten Prozeßschritt zur Zeit t₃ Adsorber A am unteren Ende evakuiert wird und Adsorber B am unteren Ende mit Rohgas, beginnend bei einem Druck von 1 bar (absolut) befüllt wird und nach Erreichen des Druckausgleiches mit dem Raffinatspeicher R durchströmt wird, und am oberen Ende des Adsorbers B der weniger stark adsorbierte Gasanteil als Produkt in den Raffinatspeicher R abgezogen wird,
d) der Prozeß weiter abläuft, indem die drei Prozeßschritte unter Umkehrung der Adsorber A/B wiederholt werden,
bzw. in einem zweiten Zwei-Adsorber-VSA-Prozeß
e) Absorber A nach Beendigung der Adsorption in einem ersten Prozeßschritt zur Zeit t₁ am oberen Ende entspannt wird, das dabei freiwerdende Gas in das obere Ende des bei Unterdruck betriebenen Adsorbers B einströmt, Adsorber A am unteren Ende mit Rohgas beaufschlagt wird, Adsorber B am unteren Ende an eine Vakuumpumpe angeschlossen ist, hierbei aber der Druck im Adsorber B durch den Gaseintritt aus Adsorber A ansteigt, und der Druck im Adsorber A abfällt, die Verbindung zum Raffinatspeicher R geschlossen ist und der Raffinatspeicher R Produkt nach außen abgibt.

2. Verfahren nach Anspruch 1, dadurch gekennzeichnet, daß die Produktabgabe des weniger stark adsorbierten Gasanteils von den Adsorbern in den Raffinatspeicher R bei 1 bar (absolut) oder 1 bar (absolut) bis 3 bar (absolut) erfolgt.

3. Verfahren nach Anspruch 1 oder 2, dadurch gekennzeichnet, daß die Gesamtzykluszeit t₁ + t₂ + t₃ 10 bis 120 Sekunden beträgt.

4. Verfahren nach den Ansprüchen 1 bis 3, dadurch gekennzeichnet, daß der Druck des zu entspannenden Adsorbers zur Zeit t₁ auf unter 1 bar (absolut) abgesenkt wird.

5. Verfahren nach den Ansprüchen 1 bis 4, dadurch gekennzeichnet, daß adsorptiv a) Sauerstoff aus Luft, b) Argon aus Stickstoff gewonnen wird.

6. Verfahren nach den Ansprüchen 1 bis 5, dadurch gekennzeichnet, daß ein VSA-Trennverfahren, beruhend auf drei Adsorptionsmittelbetten mit Raffinatspeicher R und Ventilen entsprechend den Adsorptionsbehältern A und B im Falle der Fehlfunktion eines Ventils einer Adsorbereinheit, automatisch so umgeschaltet wird, daß nur mit zwei Adsorbern der Betrieb entsprechend den Verfahren der Ansprüche 1 bis 5 aufrecht gehalten wird.

7. Verfahren zur adsorptiven Trennung von Gasgemischen mit Vakuum Swing Adsorption in drei mit Adsorptionsmittel gefüllten Behältern als Adsorber A, B und C, die mit unterem und oberem Einlaß und Auslaßende versehen sind, mit Gewinnung des nicht oder weniger stark adsorbierenden Gasanteils als Produkt aus oberem Auslaßende, mit Desorption des adsorbierten oder stärker adsorbierten Gasanteils bei Unterdruck mittels einer Vakuumpumpe,
wobei die drei Adsorber A, B und C wechselseitig betrieben werden, zu keiner Zeit des Prozeßablaufs die Zufuhr von Rohgas in die Absorber unterbunden wird, teilweise die Trennung des Rohgases bei Unterdruck erfolgt, während des ganzen Prozeßablaufes die Desorption des Adsorbats ohne Unterbrechung erfolgt, die Vakuumpumpe kontinuierlich mit der Adsorptionsmittelschüttung in Verbindung bleibt, dadurch gekennzeichnet, daß ein Adsorber innerhalb der Zeit (t₁ + t₂ + t₃) an eine Vakuumpumpe angeschlossen ist und zwei Adsorber zeitlich verschoben mit Rohgas beschickt werden, wobei die Zeitverschiebung (t₁ + t₂ + t₃) beträgt, die Adsorptionszeit eines Adsorber 2 x (t₁ + t₂ + t₃) beträgt, wobei
a) zur Zeit t₁ Adsorber A nach Beendigung der Adsorption am oberen Ende entspannt wird, das dabei freiwerdende Gas in das obere Ende eines evakuierten Adsorbers B einströmt, wobei Adsorber A am unteren Ende an eine Vakuumpumpe angeschlossen ist und Adsorber B am unteren Ende mit Rohgas befüllt, d.h. bespannt wird, Adsorber C vom unteren Ende mit Rohgas durchströmt wird bei einem Druck von größer gleich 1 bar (absolut) und am oberen Ende der nicht oder weniger stark adsorbierende Gasanteil als Produkt abgezogen wird,
b) zur Zeit t₂ Absorber A evakuiert wird und Adsorber B am oberen Ende mit Produkt aus Adsorber C gefüllt wird, wobei Adsorber B am unteren Ende bei Unterdruck bis auf 1 bar (absolut) mit Rohgas befüllt wird, Adsorber C vom unteren Ende mit Rohgas durchströmt wird bei einem Druck von größer gleich 1 atm (absolut) und am oberen Ende der nicht oder weniger stark adsorbierende Gasanteil als Produkt abgezogen wird,
c) zur Zeit t₃ Adsorber A am unteren Ende evakuiert wird und Adsorber B am unteren Ende mit Rohgas, beginnend bei einem Druck von 1 bar (absolut) befüllt wird und durchströmt wird, und am oberen Ende des Adsorbers B der weniger stark adsorbierte Gasanteil als Produkt in den Adsorber C abgezogen wird, Adsorber C vom unteren Ende mit Rohgas durchströmt wird bei einem Druck von größer gleich 1 atm (absolut) und am oberen Ende der nicht oder weniger stark adsorbierende Gasanteil als Produkt abgezogen wird,
d) der Prozeß weiter abläuft, indem die Zeiten t₁, t₂, t₃ unter Umkehrung der Adsorber A/B/C wiederholt werden,
bzw. in einem zweiten Drei-Adsorber-VSA-Prozeß
e) zur Zeit t₁ Adsorber A am oberen Ende entspannt wird, das dabei freiwerdende Gas in das obere Ende des bei Unterdruck betriebenen Adsorbers B einströmt, Adsorber A am unteren Ende mit Rohgas beaufschlagt wird, Adsorber B am unteren Ende an eine Vakuumpumpe angeschlossen ist, hierbei aber der Druck im Adsorber B durch den Gaseintritt aus Adsorber A ansteigt, und der Druck im Adsorber A abfällt, Adsorber C vom unteren Ende mit Rohgas durchströmt wird bei einem Druck von größer gleich 1 atm (absolut) und am oberen Ende der nicht oder weniger stark adsorbierende Gasanteil als Produkt abgezogen wird.

8. Verfahren nach Anspruch 7, dadurch gekennzeichnet, daß die Produktabgabe des weniger stark adsorbierten Gasanteils bei 1 bar (absolut) oder 1 bar (absolut) bis 3 bar (absolut) erfolgt.

9. Verfahren nach Anspruch 7 oder 8, dadurch gekennzeichnet, daß die Gesamtzykluszeit t₁ + t₂ + t₃ 10 bis 120 Sekunden beträgt.

10. Verfahren nach den Ansprüchen 7 bis 9, dadurch gekennzeichnet, daß der Druck des zu entspannenden Adsorbers zur Zeit t₁ auf unter 1 bar (absolut) abgesenkt wird.

## Claims

1. Process for the adsorptive separation of gas mixtures with vacuum swing adsorption in two containers filled with adsorbents as adsorbers A and B, which are provided with a lower and upper inlet and outlet end, with recovery of the unadsorbed or less highly adsorbed proportion of the gas as raffinate from the upper outlet end, which is connected to a raffinate reservoir, and desorbing the adsorbed or more highly adsorbed proportion of the gas under reduced pressure by means of a vacuum pump, characterised in that the two adsorbers A and B are operated alternately, at no time during the course of the process is the crude gas feed into the adsorbers stopped, separation of the crude gas proceeds in part under reduced pressure, desorption of the adsorbate proceeds uninterruptedly throughout the entire course of the process, the vacuum pump remains continuously connected to the adsorbent packing, wherein in a first two-adsorber VSA process,
a) on completion of adsorption in a first processing stage, adsorber A is depressurised at its upper end at time t₁, the gas so released flows into the upper end of an evacuated adsorber B, wherein adsorber A is connected at its lower end to a vacuum pump and adsorber B is filled, i.e. pressurised, with crude gas at its lower end, the connection to the raffinate reservoir R is closed and the raffinate reservoir R releases product to the outside,
b) in a second processing stage at time t₂, adsorber A is evacuated and adsorber B is filled at its upper end with raffinate from the raffinate reservoir R, wherein adsorber B is filled with crude gas at its lower end at reduced pressure of up to 1 bar (absolute),
c) in a third processing stage at time t₃, adsorber A is evacuated at its lower end and adsorber B is filled from its lower end with crude gas, starting at a pressure of 1 bar (absolute) and, once pressure equilibrium with the raffinate reservoir is reached, is perfused with crude gas, and at the upper end of adsorber B the less highly adsorbed proportion of the gas is drawn off into the raffinate reservoir R as the product,
d) the process proceeds further, the three processing stages being repeated with reversal of adsorbers A/B,
or in a second two-adsorber VSA process,
e) on completion of adsorption in a first processing stage, adsorber A is depressurised at its upper end at time t₁, the gas so released flows into the upper end of an evacuated adsorber B, adsorber A is charged at its lower end with crude gas, adsorber B is connected at its lower end to a vacuum pump, but here the pressure in adsorber B rises due to the entry of gas from adsorber A and the pressure in adsorber A falls, the connection to the raffinate reservoir R is closed and the raffinate reservoir R releases product to the outside.

2. Process according to claim 1, characterised in that the release of the less highly adsorbed proportion of the gas from the adsorbers into the raffinate reservoir R proceeds at 1 bar (absolute) or 1 bar (absolute) to 3 bar (absolute).

3. Process according to claim 1 or 2, characterised in that the total cycle time t₁ + t₂ + t₃ is 10 to 120 seconds.

4. Process according to claims 1 to 3, characterised in that the pressure of the adsorber to be depressurised is reduced to below 1 bar (absolute) at time t₁.

5. Process according to claims 1 to 4, characterised in that a) oxygen from air, b) argon from nitrogen is adsorptively recovered.

6. Process according to claims 1 to 5, characterised in that a VSA separation process based on three adsorbent beds with raffinate reservoir R and valves corresponding to the adsorption containers A and B is automatically switched over in the event of malfunction of a valve of one adsorber unit in such a way that operation in accordance with the process according to claims 1 to 5 may be maintained with only two adsorbers.

7. Process for the adsorptive separation of gas mixtures with Vacuum Swing Adsorption in three containers filled with adsorbents as adsorbers A, B and C which are provided with a lower and upper inlet and outlet end with recovery of the unadsorbed or less highly adsorbed proportion of the gas as the product from the upper outlet end, with desorption of the adsorbed or more highly adsorbed proportion of the gas at reduced pressure by means of a vacuum pump,
wherein the three adsorbers A, B and C are alternately operated, at no time during the course of the process is the crude gas feed into the adsorbers stopped, separation of the crude gas proceeds in part under reduced pressure, desorption of the adsorbate proceeds uninterruptedly throughout the entire course of the process, the vacuum pump remains continuously connected to the adsorbent packing, characterised in that one adsorber is connected to a vacuum pump over the time (t₁ + t₂ + t₃) and two adsorbers are charged with crude gas at different times, wherein the time interval is (t₁ + t₂ + t₃), the adsorption time of one adsorber is 2 x (t₁ + t₂ + t₃), wherein
a) at time t₁ adsorber A is depressurised at its upper end on completion of desorption, the gas so released flows into the upper end of an evacuated adsorber B, wherein adsorber A is connected at its lower end to a vacuum pump and adsorber B is filled, i.e. pressurised, with crude gas at its lower end, adsorber C is perfused from its lower end with crude gas at a pressure greater than or equal to 1 bar (absolute) and at its upper end the unadsorbed or less highly adsorbed proportion of the gas is drawn off as the product,
b) at time t₂, adsorber A is evacuated and adsorber B is filled at its upper end with product from adsorber C, wherein adsorber B is filled with crude gas at its lower end at reduced pressure of up to 1 bar (absolute), adsorber C is perfused from its lower end with crude gas at a pressure of greater than or equal to 1 atm (absolute) and at its upper end the unadsorbed or less highly adsorbed proportion of the gas is drawn off as the product,
c) at time t₃ adsorber A is evacuated at its lower end and adsorber B is filled from its lower end with crude gas, starting at a pressure of 1 bar (absolute) and is perfused with crude gas, and at the upper end of adsorber B the less highly adsorbed proportion of the gas is drawn off into adsorber C as the product, adsorber C is perfused with crude gas from its lower end at a pressure of greater than or equal to 1 atm (absolute) and at its upper end the unadsorbed or less highly adsorbed proportion of the gas is drawn off as the product,
d) the process proceeds further, times t₁, t₂, t₃ being repeated with reversal of adsorbers A/B/C,
or in a second three-adsorber VSA process,
e) at time t₁ adsorber A is depressurised at its upper end, the gas so released flows into the upper end of adsorber B, which is operated at reduced pressure, adsorber A is charged at its lower end with crude gas, adsorber B is connected at its lower end to a vacuum pump, but here the pressure in adsorber B rises due to the entry of gas from adsorber A and the pressure in adsorber A falls, adsorber C is perfused from its lower end with crude gas at a pressure of greater than or equal to 1 atm (absolute) and at its upper end the unadsorbed or less highly adsorbed proportion of the gas is drawn off as the product.

8. Process according to claim 7, characterised in that the release of the less highly adsorbed proportion of the gas proceeds at 1 bar (absolute) or 1 bar (absolute) to 3 bar (absolute).

9. Process according to claim 7 or 8, characterised in that the total cycle time t₁ + t₂ + t₃ is 10 to 120 seconds.

10. Process according to claims 7 to 9, characterised in that the pressure of the adsorber to be depressurised is reduced to below 1 bar (absolute) at time t₁.

## Revendications

1. Procédé de séparation par adsorption de mélanges gazeux par adsorption alternée sous vide dans deux récipients emplis d'adsorbant constituant les adsorbeurs A et B, munis d'une extrémité d'admission et d'une extrémité d'échappement inférieures et supérieures, comportant l'obtention de la partie gazeuse non adsorbante ou moins fortement adsorbante comme raffinat par l'extrémité d'échappement supérieure reliée à un réservoir de raffinat et la désorption de la partie gazeuse adsorbée ou plus fortement adsorbée sous une pression négative au moyen d'une pompe à vide, caractérisé en ce que les deux adsorbeurs A et B fonctionnent en altenance, que l'apport de gaz brut aux adsorbeurs n'est interrompu à aucun moment du déroulement du processus, que la séparation du gaz brut s'effectue partiellement sous pression négative, que la désorption de l'absorbat s'effectue sans interruption durant tout le déroulement du processus, que la pompe à vide demeure continûment en liaison avec le déversement d'adsorbant, étant entendu que dans un premier processus d'adsorption alternée sous vide à deux adsorbeurs
a) au cours d'une première étape du processus, au temps t₁, l'adsorbeur A est détendu à son extrémité supérieure après achèvement de l'adsorption, le gaz alors libéré s'engouffre dans l'extrémité supérieure d'un adsorbeur B dans lequel est fait le vide, l'adsorbeur A étant relié à son extrémité inférieure à une pompe à vide et l'adsorbeur B étant empli de gaz brut, c'est-à-dire mis sous tension, à son extrémité inférieure, la liaison avec le réservoir de raffinat R étant fermée et le réservoir de raffinat R livrant du produit vers l'extérieur,
b) au cours d'une deuxième étape du processus, au temps t₂, l'adsorbeur A est mis sous vide et l'adsorbeur B est empli à son extrémité inférieure de raffinat en provenance du réservoir de raffinat R, l'adsorbeur B étant empli de gaz brut à son extrémité inférieure sous une pression négative atteignant jusqu'à 1 bar (absolu),
c) au cours d'une troisième étape du processus, au temps t₃, l'adsorbeur A est mis sous vide à son extrémité inférieure et l'adsorbeur B est empli à son extrémité inférieure de gaz brut en partant d'une pression de 1 bar (absolu) et traversé par ce dernier après atteinte de l'égalisation de pression avec le réservoir de raffinat R et la partie gazeuse moins fortement adsorbée est déchargée comme produit par l'extrémité supérieure de l'adsorbeur B dans le réservoir de raffinat R,
d) le processus se poursuit, les trois étapes du processus étant répétées avec inversion des adsorbeurs A/B,
ou dans un second processus d'adsorption alternée sous vide à deux adsorbeurs
e) au cours d'une première étape du processus, au temps t₁, l'adsorbeur A est détendu à son extrémité supérieure après achèvement de l'adsorption, le gaz ainsi libéré s'engouffre dans l'extrémité supérieure de l'adsorbeur B fonctionnant sous une pression négative, l'adsorbeur A est chargé à son extrémité inférieure de gaz brut, l'adsorbeur B est relié à son extrémité inférieure à une pompe à vide, mais dans ce cas, la pression dans l'adsorbeur B s'accroît par la sortie de gaz de l'adsorbeur A et la pression dans l'adsorbeur A décroît, la liaison au réservoir de raffinat R est fermée et le réservoir de raffinat R livre du produit vers l'extérieur.

2. Procédé selon la revendication 1, caractérisé en ce que la décharge de la partie gazeuse moins fortement adsorbée constituant le produit par les adsorbeurs dans le réservoir de raffinat R s'effectue à 1 bar (absolu) ou entre 1 bar (absolu) et 3 bars (absolus).

3. Procédé selon la revendication 1 ou 2, caractérisé en ce que le temps total du cycle t₁ + t₂ + t₃ est compris entre 10 et 120 s.

4. Procédé selon les revendications 1 à 3, caractérisé en ce que la pression de l'adsorbeur à détendre, au temps t₁, est abaissée à moins de 1 bar (absolu).

5. Procédé selon les revendications 1 à 4, caractérisé en ce qu'on obtient par adsorption a) de l'oxygène de l'air, b) de l'argon de l'azote.

6. Procédé selon les revendications 1 à 5, caractérisé en ce qu'un procédé de séparation par adsorption alternée sous vide, reposant sur trois lits d'adsorbant avec réservoir de raffinat R et vannes correspondant aux adsorbeurs A et B est automatiquement commuté, en cas de mauvais fonctionnement d'une vanne, de façon telle que le fonctionnement correspondant aux procédés selon les revendications 1 à 5 est conservé avec deux adsorbeurs seulement.

7. Procédé de séparation par adsorption de mélanges gazeux par adsorption alternée sous vide dans trois récipients emplis d'adsorbant constituant les adsorbeurs A, B et C, munis d'une extrémité d'admission et d'une extrémité d'échappement inférieures et supérieures, comportant l'obtention de la partie gazeuse non adsorbante ou moins fortement adsorbante comme produit par l'extrémité d'échappement supérieure et la désorption de la partie gazeuse adsorbée ou plus fortement adsorbée sous une pression négative au moyen d'une pompe à vide, les trois adsorbeurs A, B et C fonctionnant en alternance, l'apport de gaz brut aux adsorbeurs n'étant interrompu à aucun moment du déroulement du prcoessus, la séparation du gaz brut s'effectuant partiellement sous pression négative, la désorption de l'adsorbat s'effectuant sans interruption durant tout le déroulement du processus, la pompe à vide demeurant continûment en liaison avec le déversement d'adsorbant, caractérisé en ce qu'un adsorbeur est relié à une pompe à vide pendant le temps (t₁ + t₂ + t₃) et que deux adsorbeurs sont chargés de gaz brut à des délais décalés dans le temps, le décalage temporel étant égal à (t₁ + t₂ + t₃), le temps d'adsorption d'un adsorbeur étant égal à 2 x (t₁ + t₂ + t₃), étant entendu que
a) au temps t₁, l'adsorbeur A est détendu à son extrémité supérieure après achèvement de l'adsorption, le gaz alors libéré s'engouffre dans l'extrémité supérieure d'un adsorbeur B dans lequel le vide a été fait, l'adsorbeur A étant relié à son extrémité inférieure à une pompe à vide et l'adsorbeur B étant empli de gaz brut, c'est-à-dire mis sous tension, à son extrémité inférieure, l'adsorbeur C étant traversé du gaz brut à partir de son extrémité inférieure, sous une pression supérieure ou égale à 1 bar (absolu) et la partie gazeuse non adsorbante ou moins fortement adsorbante étant retirée comme produit à l'extrémité supérieure,
b) au temps t₂, l'adsorbeur A est mis sous vide et l'adsorbeur B est empli à son extrémité inférieure de produit en provenance de l'adsorbeur C, l'adsorbeur B étant empli de gaz brut à son extrémité inférieure, sous une pression négative atteignant jusqu'à 1 bar (absolu), l'adsorbeur C étant traversé par du gaz brut à partir de son extrémité inférieure sous une pression supérieure ou égale à 1 atm (absolue) et la partie gazeuse non adsorbante ou moins fortement adsorbante étant retirée comme produit à l'extrémité supérieure,
c) au temps t₃, l'adsorbeur A est mis sous vide à son extrémité inférieure et l'adsorbeur B est empli à son extrémité inférieure de gaz brut en partant d'une pression de 1 bar (absolu) et est traversé par ce dernier, la partie gazeuse moins fortement adsorbée est déchargée comme produit par l'extrémité supérieure de l'adsorbeur B dans l'adsorbeur C, l'adsorbeur C est traversé par du gaz brut à partir de son extrémité inférieure sous une pression supérieure ou égale à 1 atm (absolue) et la partie gazeuse non adsorbante ou moins fortement adsorbante est retirée comme produit à l'extrémité supérieure,
d) le processus se poursuit, les temps t₁, t₂, t₃ étant répétés avec inversion des adsorbeurs A/B/C,
ou dans un second processus d'adsorption alternée sous vide à trois adsorbeurs
e) au temps t₁ l'adsorbeur A est détendu à son extrémité supérieure, le gaz ainsi libéré s'engouffre dans l'extrémité supérieure de l'adsorbeur B fonctionnant sous une pression négative, l'adsorbeur A est chargé de gaz brut à son extrémité inférieure, l'adsorbeur B est relié à son extrémité inférieure à une pompe à vide, mais dans ce cas la pression dans l'adsorbeur B s'accroît par la sortie de gaz de l'adsorbeur A et la pression dans l'adsorbeur A décroît, l'adsorbeur C est traversé par du gaz brut à partir de son extrémité inférieure à une pression supérieure ou égale à 1 atm (absolue) et la partie gazeuse non adsorbante ou moins fortement adsorbante est retirée comme produit à l'extrémité supérieure.

8. Procédé selon la revendication 7, caractérisé en ce que la décharge de la partie gazeuse moins fortement adsorbée constituant le produit s'effectue à 1 bar (absolu) ou entre 1 bar (absolu) et 3 bars (absolus).

9. Procédé selon la revendication 7 ou 8, caractérisé en ce que le temps total du cycle t₁ + t₂ + t₃ est compris entre 10 et 120 s.

10. Procédé selon les revendications 7 à 9, caractérisé en ce que la pression de l'adsorbeur à détendre est abaissée au temps t₁ à moins de 1 bar (absolu).
